(19) Europäisches Patentamt
European Patent Office
Office européen des brevets

(11) **EP 3 187 862 B1**

(12) **EUROPÄISCHE PATENTSCHRIFT**

(45) Veröffentlichungstag und Bekanntmachung des Hinweises auf die Patenterteilung:
**05.01.2022   Patentblatt 2022/01**

(21) Anmeldenummer: **16002330.5**

(22) Anmeldetag: **03.11.2016**

(51) Int Cl.:
*G01N 25/20* *(2006.01)*

(54) **VERFAHREN UND VORRICHTUNG ZUR THERMISCHEN ANALYSE EINER PROBE UND/ODER ZUR KALIBRIERUNG EINER TEMPERATURMESSEINRICHTUNG**

METHOD AND DEVICE FOR THE THERMAL ANALYSIS OF A SAMPLE AND/OR FOR CALIBRATING A TEMPERATURE MEASUREMENT DEVICE

PROCÉDÉ ET DISPOSITIF D'ANALYSE THERMIQUE D'UN ÉCHANTILLON ET/OU D'ÉTALONNAGE D'UN THERMOMÈTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2015   DE 102015122037**

(43) Veröffentlichungstag der Anmeldung:
**05.07.2017   Patentblatt 2017/27**

(73) Patentinhaber: **Netzsch-Gerätebau GmbH 95100 Selb (DE)**

(72) Erfinder:
• **Brunner, Martin**
  **95176 Konradsreuth (DE)**
• **Schindler, Alexander**
  **95191 Leupoldsgrün (DE)**
• **Lindemann, André**
  **06217 Merseburg (DE)**

(56) Entgegenhaltungen:
EP-A2- 2 693 205      DE-A1- 4 131 040
DE-A1- 4 301 987      JP-B2- 3 568 304
US-A1- 2014 140 364

• Tm M Manuelian ET AL: "Thermal Diffusivity, Specific Heat, and Thermal Conductivity Measurment Using NETZSCH LFA 447 Nanoflash", , 16. Mai 2008 (2008-05-16), XP055374833, Gefunden im Internet: URL:http://www.chem.mtu.edu/org/ctc/pdf/Na noflash web page 1-29-09.pdf
• David Gilbers ET AL: "Charakterisierung und Validierung des Laser-Flash-Verfahrens zur Bestimmung der Temperaturleitfähigkeit im Temperaturbereich bis 2000 °C", , 18. März 2013 (2013-03-18), XP055374460, Gefunden im Internet: URL:http://www.ak-thermophysik.de/download /gefta/2013/Charakterisierung_und_Validier ung_des_Laser_Flash_Verfahrns _ David Gilbers.pdf [gefunden am 2017-05-19]
• Edilma Pereira Oliviera ET AL: "THE FLASH METHOD TO THE MEASUREMENT OF THE THERMAL PROPERTIES OF YOGURT", Proceedings of COBEM 2009 20th International Congress of Mechanical Engineering, 20. November 2009 (2009-11-20), XP055375462, Gefunden im Internet: URL:http://abcm.org.br/app/webroot/anais/c obem/2009/pdf/COB09-1439.pdf [gefunden am 2017-05-23]

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**(Forts. nächste Seite)**

• Juergen Blumm: "Das Laserflash Verfahren - aktuelle Entwicklungen und Tendenzen", Symposium "Tendenzen in der Materialentwicklung und die Bedeutung von Wärmetransporteigenschaften", 23. März 2007 (2007-03-23), XP055374425, Gefunden im Internet: URL:http://www.ak-thermophysik.de/download /gefta/2007/juergen_blumm.pdf [gefunden am 2017-05-19]

**Beschreibung**

Die vorliegende Erfindung betrifft ein Verfahren und eine Vorrichtung zur thermischen Analyse einer Probe, sowie ein Verfahren und eine Vorrichtung zur Kalibrierung einer in einer Vorrichtung zur thermischen Analyse verwendeten Temperaturmesseinrichtung.

In der thermischen Analyse werden Materialeigenschaften anhand einer Probe aus dem betreffenden Material als Funktion der Temperatur untersucht. Daher spielt eine korrekte Thermometrie, d. h. eine korrekte Messung der Temperatur der Probe eine wichtige Rolle.

Aus dem Stand der Technik sind hierfür z. B. Temperatursensoren in Form von Thermoelementen oder elektrischen Widerstandsthermometern bekannt, die z. B. in thermischem Kontakt zur Probe angeordnet werden können, um die Temperatur der Probe zu messen.

Diese Messung ist jedoch je nach Temperaturprogramm, d. h. der während der thermischen Analyse vorgesehenen Veränderung der Probentemperatur, mehr oder weniger fehlerbehaftet, da der Temperatursensor nicht die Temperatur im Inneren der Probe sondern an einem Rand der Probe misst.

Dieser Messfehler ist noch bedeutsamer für (oftmals zum Einsatz kommende) Temperatursensoren, die nicht in direktem Kontakt zur Probe angeordnet werden können, sondern stattdessen der Probe benachbart, also räumlich von dieser separiert, innerhalb eines temperierbaren Probenraumes angeordnet sind.

Dieses Problem kann durch eine geeignete "Kalibrierung" des verwendeten Temperatursensors bzw. der damit gebildeten Temperaturmesseinrichtung deutlich verringert werden. Für eine derartige Kalibrierung kann z. B. vorgesehen sein, in der betreffenden Vorrichtung zur thermischen Analyse im Verlauf eines Temperaturprogramms die Temperatur von einer oder mehreren bei jeweils bekannten Temperaturen aufschmelzenden Proben zu messen, um sodann anhand eines Vergleiches der gemessenen Schmelztemperaturen mit den (z. B. aus der Literatur) bekannten Schmelztemperaturen die Temperaturmesseinrichtung bzw. den Temperatursensor zu kalibrieren.

Eine derartige Kalibrierung der Temperaturmesseinrichtung ist jedoch nachteiligerweise relativ aufwendig. Außerdem ist trotz Kalibrierung die gemessene Temperatur nicht notwendigerweise repräsentativ für die mittlere Probentemperatur im Probeninneren, da es je nach Temperaturprogramm mehr oder weniger große Temperaturgradienten in der Probe geben kann. Ein weiterer Nachteil kann darin bestehen, dass bei einer auch nur geringfügigen Änderung der Position des Temperatursensors die Kalibrierung nicht mehr stimmt und es zu einem systematischen Fehler in der Temperaturmessung kommt.

Bei der bekannten Thermometrie im Rahmen einer thermischen Analyse, sei es mit oder ohne Kalibrierung der vorstehend erläuterten Art, ist ferner nachteilig, dass viele Temperatursensoren, wie z. B. Thermoelemente und Widerstandsthermometer, oftmals nicht langzeitstabil sind, sondern aufgrund von Alterung und/oder Kontamination im Laufe der Zeit ihre Eigenschaften verändern.

Aus der Veröffentlichung M. Manuelian et al, "Thermal Diffusivity, Specific Heat, and Thermal Conductivity Measurment Using NETZSCH LFA 447 Nanoflash", May 16, 2008 (URL: http://www.chem.mtu.edu/org/ctc/pdf/Nanoflash web page 1-29-09.pdf), wie auch aus der Veröffentlichung Juergen Blumm, "Das Laserflash Verfahren - aktuelle Entwicklungen und Tendenzen", Symposium "Tendenzen in der Materialentwicklung und die Bedeutung von Wärmetransporteigenschaften", 23.03.2007 (URL: http://www.ak-thermophysik.de/download/gefta/2007/juergen_blumm.pdf), ist ein Verfahren zur thermischen Analyse einer Probe bekannt, umfassend das Temperieren der Probe gemäß eines Temperaturprogramms, in dessen Verlauf die Probentemperatur sich ändert, während ein in Kontakt mit einem Probenträger stehendes Thermoelement die Probentemperatur misst und die Temperaturleitfähigkeit der Probe im Verlauf des Temperaturprogramms ermittelt wird.

In der Veröffentlichung DE 41 31 040 A1 werden eine Vorrichtung und ein Verfahren zur Temperaturleitfähigkeitsmessung an einer Probe beschrieben, wobei die Probentemperatur (Ofentemperatur) mit einem Thermoelement gemessen und die Temperaturleitfähigkeit der Probe bei verschiedenen Temperaturen ermittelt wird.

Die Veröffentlichung US 2014/0140364 beschreibt ein Verfahren zum Kalibrieren eines Temperatursensors, der auf einem Substrat angeordnet ist. Bei dem Verfahren werden mittels eines auf dem gleichen Substrat angeordneten zweiten Temperatursensors Temperaturmessungen basierend auf der Temperaturleitfähigkeit des Substrats durchgeführt.

Es ist eine Aufgabe der vorliegenden Erfindung, einen neuartigen Weg aufzuzeigen, mittels welchem die Genauigkeit und Zuverlässigkeit einer Messung der Temperatur einer Probe im Rahmen einer an dieser Probe durchgeführten thermischen Analyse verbessert werden können.

Gemäß eines erstens Aspekts der Erfindung geht diese von einem Verfahren zur thermischen Analyse einer Probe aus, welches umfasst:

- Temperieren der Probe gemäß eines Temperaturprogramms, in dessen Verlauf eine Temperatur der Probe verändert wird,

- Messen der Temperatur der Probe im Verlauf des Temperaturprogramms,

- Messen wenigstens einer von der Temperatur der Probe verschiedenen physikalischen Eigenschaft der Probe im Verlauf des Temperaturprogramms.

Zur Lösung der oben genannten Aufgabe ist dieses erfindungsgemäße Verfahren dadurch gekennzeichnet, dass das Messen der Temperatur der Probe umfasst:

- Bestrahlen eines ersten Oberflächenbereichs der Probe mit einem elektromagnetischen Anregungsstrahl, Detektieren einer Intensität einer von einem zweiten Oberflächenbereich der Probe infolge der Bestrahlung ausgehenden Wärmestrahlung,

- Ermitteln einer Temperaturleitfähigkeit der Probe durch Auswerten der detektierten Intensität der Wärmestrahlung,

- Ermitteln der Temperatur der Probe anhand der ermittelten Temperaturleitfähigkeit unter Verwendung von Daten, welche den temperaturabhängigen Verlauf der Temperaturleitfähigkeit der Probe angeben.

Die im Rahmen der Erfindung vorgesehenen Schritte eines Bestrahlens eines ersten Oberflächenbereichs der Probe mit einem elektromagnetischen Anregungsstrahl, Detektion einer Intensität einer von einem zweiten Oberflächenbereich der Probe infolge der Bestrahlung ausgehenden Wärmestrahlung, sowie eines Ermittelns der Temperaturleitfähigkeit der Probe durch Auswerten der detektierten Intensität der Wärmestrahlung, wie z. B. in der oben genannten Veröffentlichung M. Manuelian et al, "Thermal Diffusivity, Specific Heat, and Thermal Conductivity Measurment Using NETZSCH LFA 447 Nanoflash" detailliert beschrieben, werden nachfolgend zusammengefasst auch kurz als "Flash-Verfahren" bezeichnet.

Die Grundidee der Erfindung besteht somit darin, zunächst mittels des auch im Stand der Technik oftmals als "Flash-Verfahren" bezeichneten Verfahrens eine Temperaturleitfähigkeit der Probe zu ermitteln, um sodann anhand der ermittelten Temperaturleitfähigkeit unter Verwendung von (z. B. aus der Literatur oder z. B. anderweitigen Messungen bekannten) Daten, welche den temperaturabhängigen Verlauf dieser Temperaturleitfähigkeit der Probe angeben, auf die Temperatur einer Probe zu schließen.

Das Temperieren der Probe kann z. B. mittels einer gesteuert beheizbaren und/oder gesteuert kühlbaren Probenkammer durchgeführt werden, in welcher die Probe während der Messung untergebracht ist, z. B. in einer Aufnahme eines Probenhalters gelagert.

Die Steuerung einer hierfür vorgesehenen, z. B. elektrischen Heiz- und/oder Kühleinrichtung kann z. B. in programmgesteuerter Weise durch eine Steuereinrichtung wie einen Mikrocontroller oder dgl. durchgeführt werden, wobei das hierbei vorgesehene Temperaturprogramm, d. h. ein bestimmter zeitabhängiger Verlauf der Temperatur, entweder durch eine einfache Steuerung der Heiz- bzw. Kühlleistung oder durch eine auf Basis der Messung der Temperatur der Probe geregelte Steuerung der Heiz- bzw. Kühlleistung bewerkstelligt werden kann.

In einer Ausführungsform ist im Verlauf des Temperaturprogramms eine Veränderung der Temperatur der Probe um mindestens 100 K, insbesondere um mindestens 200 K vorgesehen.

Das Temperaturprogramm kann eine zugrundeliegende, z. B. hinsichtlich der Zeitabhängigkeit lineare Temperaturänderung oder aber einen anderen zeitabhängigen Verlauf der Temperatur vorsehen. Alternativ oder zusätzlich zu einer im Wesentlichen konstanten zugrundeliegenden Temperaturänderungsrate kann auch eine (z. B. sinusförmige) Temperaturmodulation im Verlauf des Temperaturprogramms vorgesehen sein.

Neben der Messung der Temperatur der Probe wird im Verlauf des Temperaturprogramms noch wenigstens eine weitere, von der Temperatur der Probe verschiedene physikalische Eigenschaft der Probe gemessen. Neben der bereits erwähnten Temperaturleitfähigkeit (z. B. gemessen mit dem erwähnten Flash-Verfahren) seien hier lediglich beispielhaft eine auf die Probe ausgeübte Kraft und/oder eine Abmessung (z. B. Länge oder Dicke einer Probe), beides relevant z. B. bei einer so genannten thermomechanischen Analyse bzw. Dilatometrie, und die (optische) Reflektivität der Probenoberfläche genannt.

Der hier verwendete Begriff "Temperaturleitfähigkeit" soll eine physikalische Eigenschaft der Probe bezeichnen, welche eine zeitliche und/oder räumliche Veränderung der räumlichen Verteilung der Temperatur und/oder der Wärme durch Wärmeleitung als Folge eines Temperaturgefälles quantifiziert. Darunter fällt insbesondere die Temperaturleitfähigkeit $\alpha$ in einem engeren Sinne, wie sie definiert ist als

$$\alpha = \lambda / \rho \times c,$$

wobei bezeichnen:

λ die Wärmeleitfähigkeit der Probe,
ρ die Dichte der Probe, und
c die spezifische Wärmekapazität der Probe.

Die in vorstehender Definition enthaltene Wärmeleitfähigkeit λ ist hierbei der Proportionalitätsfaktor in der Abhängigkeit der Wärmestromdichte vom Temperaturgradienten:

$$dQ/dt = λ × A × (ΔT/L),$$

wobei bezeichnen:

dQ/dt den Wärmestrom,
A die vom Wärmestrom durchflossene Querschnittsfläche,
L die Dicke der vom Wärmestrom durchflossenen Schicht, und ΔT die Temperaturdifferenz zwischen den Randflächen der Schicht mit der Dicke L.

Nach dem oben gesagten soll nicht ausgeschlossen sein, dass als "Temperaturleitfähigkeit" im Sinne der Erfindung eine mit der wie oben definierten "Temperaturleitfähigkeit a" mathematisch zusammenhängende Größe wie z. B. die wie vorstehend definierte "Wärmeleitfähigkeit A" verwendet wird.

In dieser Hinsicht wesentlich für die Erfindung ist, dass die durch Auswerten der detektierten Intensität der Wärmestrahlung ermittelte Temperaturleitfähigkeit dieselbe Definition bzw. physikalische Bedeutung besitzt wie diejenige Temperaturleitfähigkeit, deren Temperaturabhängigkeit von den erfindungsgemäß bei der Temperaturermittlung verwendeten Daten angegeben wird.

Das Bestrahlen erfolgt bevorzugt durch einen bzw. im Verlauf des Temperaturprogramms durch eine Folge von Anregungspulsen, beispielsweise mit einer Pulsdauer von weniger als 100 ms, insbesondere weniger als 50 ms.

Das Bestrahlen kann z. B. mittels einer Blitzlampe (z. B. Halogenblitzlampe) oder mittels eines (bevorzugt gepulst betriebenen) Lasers durchgeführt werden.

Der elektromagnetische Anregungsstrahl kann z. B. dominierende Spektralanteile im sichtbaren und/oder infraroten Bereich aufweisen.

Das Bestrahlen kann z. B. mit einer über den ersten Oberflächenbereich der Probe einheitlichen Strahlstromdichte erfolgen. Dieser erste Oberflächenbereich kann z. B. kreisförmig sein, und z. B. auf einer Flachseite einer plättchenförmigen Probe vorgesehen sein oder von der (gesamten) solchen Flachseite gebildet sein. Der zweite Oberflächenbereich der Probe ist bevorzugt nicht identisch mit dem ersten Oberflächenbereich und befindet sich bevorzugt z. B. an einer dem ersten Oberflächenbereich entgegengesetzten Seite der Probe.

Im Falle der Verwendung einer plättchenförmigen Probe sind die ersten und zweiten Oberflächenbereiche bevorzugt an den einander entgegengesetzten Flachseiten der Probe angeordnet bzw. werden durch diese Flachseiten gebildet.

Das Detektieren der Intensität der von dem zweiten Oberflächenbereich der Probe ausgehenden Wärmestrahlung kann z. B. mittels eines (weniger bevorzugt) bildgebenden oder (bevorzugt) mittels eines die Wärmestrahlung kumulativ erfassenden Infrarot(IR)-Detektors durchgeführt werden.

Zwischen der Probe und einem zur Detektion der Wärmestrahlungsintensität eingesetzten Detektor und/oder zwischen der Probe und einer zur Bestrahlung der Probe eingesetzten Strahlungsquelle (z. B. Blitzlampe oder Laser) kann ein optisches System, insbesondere ein optisches Abbildungssystem, insbesondere umfassend wenigstens ein refraktives Element und/oder wenigstens reflektives Element vorgesehen sein. Damit kann vorteilhaft eine die Genauigkeit des Flash-Verfahrens vergrößernde Strahlführung des Anregungsstrahls und/oder der zu detektierenden Wärmestrahlung realisiert werden.

In einer Ausführungsform wird das Verfahren an einer plättchenförmigen Probe (z. B. mit runder Form) durchgeführt, wobei die plättchenförmige Probe eine über deren Fläche betrachtet einheitliche Dicke besitzt (z. B. im Bereich von 0,1 bis 6 mm).

Bei dem Material der Probe kann es sich z. B. um ein metallisches Material oder ein halbleitendes Material handeln. Besonders geeignet ist die Erfindung für Proben mit einer Temperaturleitfähigkeit $α$ im Bereich oberhalb $1 \times 10^{-6}$ m²/s, beispielsweise im Bereich von $1 \times 10^{-6}$ m²/s bis etwa $5 \times 10^{-4}$ m²/s).

Das Ermitteln der Temperaturleitfähigkeit der Probe durch Auswerten der detektierten Intensität der Wärmestrahlung kann vorteilhaft unter Rückgriff auf sämtliche aus dem Stand der Technik zu Flash-Verfahren hierfür bekannten Methoden erfolgen. In der Regel wird bei dieser Ermittlung ein die Probe beschreibendes physikalisch-mathematisches Modell enthaltend wenigstens die Temperaturleitfähigkeit der Probe als einen Modellparameter verwendet, mittels welchem ein zeitabhängig gemessener Verlauf der Wärmestrahlungsintensität dazu verwendet wird, um den Modellparameter "Temperaturleitfähigkeit" (und/oder wenigstens einen die Berechnung dieser Temperaturleitfähigkeit gestattenden Modellparameter) durch eine mathematische Ausgleichsrechnung ("Fit") zu ermitteln. Eine entsprechende Berechnung der Temperaturleitfähigkeit der Probe wird bevorzugt mittels einer programmgesteuerten Datenverarbeitungseinrichtung durchgeführt, bei welcher es sich insbesondere z. B. um eine zur Steuerung von (z. B. sämtlichen) ansteuerbaren Komponenten einer betreffenden Vorrichtung zur thermischen Analyse vorgesehene Steuereinrichtung handeln kann.

Auch das Ermitteln der Temperatur der Probe anhand der ermittelten Temperaturleitfähigkeit unter Verwendung von Daten, welche den temperaturabhängigen Verlauf der Temperaturleitfähigkeit der Probe angeben, kann vorteilhaft mittels einer programmgesteuerten Datenverarbeitungseinrichtung, z. B. der erwähnten Steuereinrichtung, durchgeführt werden. Bevorzugt umfasst die zur Ermittlung verwendete Einrichtung eine Speichereinheit, in welcher (z. B. neben einem zur Betriebssteuerung (z. B. Ansteuerung des Temperaturprogramms und der im Flash-Verfahren benutzten Bestrahlungsquelle) erforderlichen Programmcode) die benötigten Daten zur Ermittlung der Probentemperatur gespeichert sind. Diese Daten können z. B. in Form einer (digitalen) "Nachschlagtabelle" gespeichert sein, so dass aus dieser Tabelle für eine bestimmte Temperaturleitfähigkeit die zugehörige (z. B. vorab aus der Literatur ermittelte) Temperatur ausgelesen werden kann.

Für den in der Praxis eher selten vorkommenden Fall, dass (aufgrund eines entsprechenden Probenmaterials) eine ermittelte Temperaturleitfähigkeit nicht eindeutig einer zugehörigen Temperatur zugeordnet werden kann, und im Verlauf des Temperaturprogramms tatsächlich mehrere voneinander verschiedene Temperaturen mit gleicher zugeordneter Temperaturleitfähigkeit erreicht werden, genügt es im Rahmen der Ermittlung der Probentemperatur eine entsprechende "Grobbestimmung" der Temperatur in geeigneter Weise vorzunehmen, um auf dieser Basis zu einer eindeutigen Zuordnung der richtigen Temperatur zu gelangen. Die Grobbestimmung der Temperatur kann, abgesehen von einer hierfür vorgesehenen konventionellen Temperaturmesseinrichtung zumeist auch bereits aus den Eigenschaften bzw. der Ansteuerung des konkreten Temperaturprogramms bewerkstelligt werden.

Ausgehend von dem bereits erwähnten bekannten Verfahren zur thermischen Analyse einer Probe, umfassend:

- Temperieren der Probe gemäß eines Temperaturprogramms, in dessen Verlauf eine Temperatur der Probe verändert wird,

- Messen der Temperatur der Probe im Verlauf des Temperaturprogramms,

- Messen wenigstens einer von der Temperatur der Probe verschiedenen physikalischen Eigenschaft der Probe im Verlauf des Temperaturprogramms,

wird gemäß eines weiteren Aspekts der Erfindung vorgeschlagen, dass das Messen der Temperatur der Probe umfasst:

- Anordnen einer weiteren Probe benachbart der Probe, um die Probe und die weitere Probe gemeinsam der Temperierung zu unterziehen,

- Bestrahlen eines ersten Oberflächenbereichs der weiteren Probe mit einem elektromagnetischen Anregungsstrahl, Detektieren einer Intensität einer von einem zweiten Oberflächenbereich der weiteren Probe infolge der Bestrahlung ausgehenden Wärmestrahlung,

- Ermitteln einer Temperaturleitfähigkeit der weiteren Probe durch Auswerten der detektierten Intensität der Wärmestrahlung,

- Ermitteln der Temperatur der Probe anhand der ermittelten Temperaturleitfähigkeit der weiteren Probe unter Verwendung von Daten, welche den temperaturabhängigen Verlauf der Temperaturleitfähigkeit der weiteren Probe angeben.

Der Vorteil dieses Verfahrens besteht darin, dass im Unterschied zu dem oben bereits beschriebenen Verfahren keine Daten benötigt werden, welche den temperaturabhängigen Verlauf der Temperaturleitfähigkeit der Probe angeben.

Bei dieser Erfindungsvariante besteht die Grundidee darin, im Rahmen derselben thermischen Analyse (wenigstens) eine "weitere Probe" einer gemeinsamen Temperierung zusammen mit der "eigentlichen", d. h. thermisch zu analysierenden Probe zu unterziehen, um sodann die weitere Probe gewissermaßen als Vehikel zur Realisierung einer Probentemperaturmessung bereits beschriebenen Art zu verwenden. Hierfür genügt die Bekanntheit bzw. Bereitstellung von Daten, welche den temperaturabhängigen Verlauf der Temperaturleitfähigkeit der weiteren Probe angeben (Bei dieser Variante ist vorausgesetzt, dass die Probe und die weitere Probe stets dieselbe Temperatur besitzen).

Abgesehen von der Existenz und der gemeinsamen Temperierung der "weiteren Probe" sowie der Verwendung der für diese weitere Probe bereitgestellten Daten betreffend die temperaturabhängige Temperaturleitfähigkeit können sämtliche für das oben gemäß des ersten Aspekts der Erfindung beschriebene Verfahren beschriebenen besonderen Ausführungsformen und Ausgestaltungen in analoger Weise auch als Ausführungsformen bzw. Ausgestaltungen des Verfahrens gemäß des zweiten Aspekts der Erfindung vorgesehen werden. Dies betrifft insbesondere auch die bereits beschriebenen Vorrichtungskomponenten und technischen Merkmale derartiger Vorrichtungskomponenten, die zur Durchführung der einzelnen Verfahrensschritte vorgesehen werden können.

Zu beachten ist hierbei lediglich, dass das auch im Verfahren gemäß des zweiten Aspekts der Erfindung vorgesehene Flash-Verfahren jedenfalls an der weiteren Probe (und nur optional an der Probe) durchgeführt wird. Insofern kann ein zur Lagerung der weiteren Probe vorgesehener Probenhalter bezüglich einer verwendeten Anregungsstrahlquelle und bezüglich einer verwendeten Wärmestrahlungsdetektionseinrichtung so angeordnet sein, dass die Bestrahlung und die Detektion (nur) an der weiteren Probe erfolgen.

In einer Weiterbildung des Verfahrens ist vorgesehen, dass im Verlauf des Temperaturprogramms unter Verwendung einer Probenwechseleinrichtung ein (bevorzugt automatisch angesteuerter) Wechsel zwischen mehreren der gemeinsamen Temperierung unterzogenen Proben dergestalt verwendet wird, dass unter Verwendung einer (einzigen) Bestrahlungsquelle und einer (einzigen) Wärmestrahlungsdetektionseinrichtung nacheinander jeweils eine ausgewählte Probe dem Flash-Verfahren unterzogen werden kann. Eine einfache Implementierung dieser Ausführungsform ist die Verwendung eines so genannten Probenwechslers, beispielsweise eines revolverartig drehbaren Probenhalters, mit mehreren Aufnahmen zur gleichzeitigen Aufnahme mehrerer Proben, von denen je nach Drehstellung des Probenwechslers jeweils eine Probe in den Strahlengang der Bestrahlungseinrichtung und der Detektionseinrichtung gebracht werden kann.

Mit einem derartigen Probenwechsel bzw. der Verwendung eines derartigen Probenwechslers kann vorteilhaft z. B. innerhalb ein und desselben Messablaufs bzw. Temperaturprogramms gegebenenfalls (wenigstens) eine "Probe" der thermischen Analyse einschließlich des Flash-Verfahrens als Teil dieser Analyse unterzogen werden, und (wenigstens) eine "weitere Probe" mit den in diesem Fall ohnehin vorhandenen Mitteln zur Durchführung des Flash-Verfahrens diesem Flash-Verfahren zum Zwecke der Messung der Temperatur der (wenigstens) einen Probe unterzogen werden.

Die Steuerung eines Probenwechslers kann in programmgesteuerter Weise, z. B. mittels der erwähnten Steuereinrichtung durchgeführt werden.

Falls mehrere "weitere Proben" (gleichen oder voneinander verschiedenen Materials) zur Ermittlung der Temperatur der "Probe" durch Anwendung des Flash-Verfahrens unter Verwendung der jeweiligen (gegebenenfalls voneinander verschiedenen) Daten verwendet werden, so kann vorteilhaft beim Ermitteln der Probentemperatur eine Redundanz geschaffen werden, und darauf basierend die letztendlich ermittelte Temperatur z. B. als ein Mittelwert derjenigen Temperaturen vorgesehen sein, die sich anhand der Ermittlungsergebnisse für die einzelnen "weiteren Proben" ergeben.

Gemäß eines dritten Aspekts der Erfindung wird ein Verfahren zur Kalibrierung eines in einer Vorrichtung zur thermischen Analyse einer Probe zur Messung einer Temperatur der Probe verwendeten (z. B. "konventionellen") Temperaturmesseinrichtung vorgeschlagen, umfassend:

- Anordnen einer Probe in der Vorrichtung zur thermischen Analyse,

- Temperieren der Probe gemäß eines Temperaturprogramms, in dessen Verlauf eine Temperatur der Probe verändert wird,

- Messen der Temperatur der Probe im Verlauf des Temperaturprogramms mittels der Temperaturmesseinrichtung,

- (zusätzliches) Messen der Temperatur der Probe im Verlauf des Temperaturprogramms durch folgende Schritte:

  - Bestrahlen eines ersten Oberflächenbereichs der Probe mit einem elektromagnetischen Anregungsstrahl, Detektieren einer Intensität einer von einem zweiten Oberflächenbereich der Probe infolge der Bestrahlung ausgehenden Wärmestrahlung,

  - Ermitteln einer Temperaturleitfähigkeit der Probe durch Auswerten der detektierten Intensität der Wärmestrahlung,

  - Ermitteln der Temperatur der Probe anhand der ermittelten Temperaturleitfähigkeit unter Verwendung von Daten, welche den temperaturabhängigen Verlauf der Temperaturleitfähigkeit der Probe angeben,

- Kalibrieren der Temperaturmesseinrichtung anhand eines Vergleiches von Ergebnissen der beiden Messungen der Temperatur der Probe.

Abgesehen von der Existenz und Verwendung einer zur Messung einer Temperatur der Probe verwendeten Temperaturmesseinrichtung (und dem letztgenannten Verfahrensschritt eines Kalibrierens dieser Temperaturmesseinrichtung) umfasst dieses Verfahren gemäß des dritten Aspekts der Erfindung augenscheinlich Verfahrensschritte, bei denen als besondere Ausführungsformen bzw. Ausgestaltungen vorteilhaft in analoger Weise auf Ausführungsformen bzw. Ausgestaltungen zurückgegriffen werden kann, wie diese oben bereits für die Verfahren gemäß des ersten und des zweiten Aspekts der Erfindung beschrieben wurden.

So kann das Anordnen der Probe z. B. unter Verwendung eines Probenhalters mit einer einzigen Aufnahme zur Aufnahme einer Probe durchgeführt werden, der in einer temperierbaren Probenkammer der Vorrichtung untergebracht ist. Wenn mittels dieser Probe eine Kalibrierung der Temperaturmesseinrichtung durchgeführt werden soll, so erfordert dies die Daten, welche den temperaturabhängigen Verlauf der Temperaturleitfähigkeit dieser Probe angeben. Wenn jedoch die Temperaturmesseinrichtung bereits in dieser Weise kalibriert wurde, so kann mit derselben Vorrichtung auch eine Probe eines (bekannten oder unbekannten) Materials einer thermischen Analyse unterzogen werden (ohne dass hierbei derartige Daten benötigt werden).

Alternativ kann ein Probenwechsel, z. B. mittels eines gesteuert betreibbaren Probenwechslers erfolgen, der wenigstens zwei (oder mehr) Aufnahmen aufweist. Dies ist bereits deshalb vorteilhaft, weil damit in einem (einzigen) Messdurchgang (Temperaturprogramm) mehrere Proben thermisch analysiert werden können, sei es bei bereits kalibrierter Temperaturmesseinrichtung unter Verwendung der Temperaturmesseinrichtung zum Messen der Temperatur der Probe im Verlauf des Temperaturprogramms, oder bei noch nicht bzw. zu lange zurückliegender Kalibrierung der Temperaturmesseinrichtung mit einer gleichzeitigen Kalibrierung der Temperaturmesseinrichtung (indem wenigstens eine der Proben als eine Probe zur zusätzlichen Temperaturmessung mittels des Flash-Verfahrens eingesetzt und zur nachträglichen Kalibrierung der Temperaturmesseinrichtung nach Abschluss des Temperaturprogramms verwendet wird).

Gemäß eines vierten Aspekts der Erfindung wird eine Vorrichtung umfassend Mittel zur Durchführung eines Verfahrens zur thermischen Analyse einer Probe und/oder zur Kalibrierung einer in einer solchen Vorrichtung enthaltenen Temperaturmesseinrichtung nach einem der Ansprüche 4, 5 und 6 vorgeschlagen.

Für die konkrete Ausgestaltung der Mittel (Vorrichtungskomponenten) kommen sämtliche weiter oben bereits erläuterten Ausführungen und Ausgestaltungen in Betracht.

Mit der Vorrichtung zur thermischen Analyse einer Probe nach Anspruch 4 kann insbesondere das Verfahren gemäß des ersten Aspekts der Erfindung durchgeführt werden.

Zur Ermöglichung einer Durchführung des Verfahrens gemäß des zweiten Aspekts (alternativ oder zusätzlich zur Möglichkeit der Durchführung des Verfahrens gemäß des ersten Aspekts) ist ein weiterer Probenhalter zur Aufnahme (wenigstens) einer "weiteren Probe" und/oder z. B. ein Mehrfach-Probenhalter (insbesondere z. B. verlagerbarer oder drehbarer Probenwechsler) mit mehreren Aufnahmen erforderlich. Ferner ist vorzusehen, dass die (wenigstens) eine "weitere Probe" mittels der Bestrahlungsquelle, der Detektionseinrichtung und der Auswerteeinrichtung dem Flash-Verfahren zur Ermittlung der Probentemperatur unterzogen werden kann (vgl. Anspruch 5).

Zur Ermöglichung einer Durchführung des Verfahrens gemäß des dritten Aspekts der Erfindung (alternativ oder zusätzlich zu den Verfahren gemäß des ersten und/oder zweiten Aspekts) erfordert die Vorrichtung eine zu kalibrierende Temperaturmesseinrichtung (z. B. umfassend wenigstens ein Thermoelement und/oder wenigstens ein Widerstandsthermometern oder dgl.). Im Prinzip genügt ein Probenhalter zur Aufnahme einer (einzigen) Probe, wobei jedoch auch bei dieser Ausführung ein Mehrfach-Probenhalter bzw. ein angesteuert betreibbarer Probenwechsler von Vorteil ist (vgl. Anspruch 6).

Gemäß eines fünften Aspekts der Erfindung wird ein Computerprogrammprodukt nach Anspruch 7 vorgeschlagen.

Die Erfindung wird nachfolgend anhand von Ausführungsbeispielen mit Bezug auf die beigefügten Zeichnungen weiter beschrieben. Es stellen dar:

Fig. 1    eine Vorrichtung zur thermischen Analyse einer Probe gemäß eines Ausführungsbeispiels,

Fig. 2    eine Auftragung der Temperaturleitfähigkeit $\alpha$ in Abhängigkeit von der Temperatur, für verschiedene Materialien (Literaturwerte),

Fig. 3    eine doppelt-logarithmische Auftragung der Temperaturleitfähigkeit $\alpha$ von Silizium in Abhängigkeit von der Temperatur (Literaturwerte),

Fig. 4    eine Auftragung einer Unsicherheit einer Temperaturmessung in Abhängigkeit von der Temperatur bei Verwendung eines Flash-Verfahrens an einer Probe aus Silizium, und

Fig. 5    eine Vorrichtung zur thermischen Analyse einer Probe gemäß eines weiteren Ausführungsbeispiels.

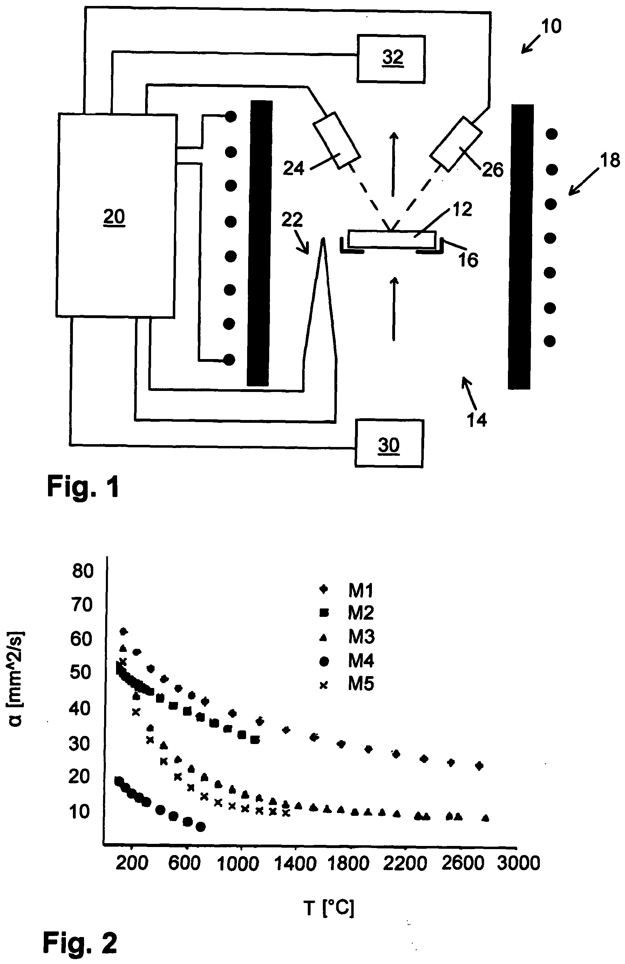

Fig. 1 zeigt schematisch eine Vorrichtung 10 zur thermischen Analyse einer Probe 12, umfassend eine Probekammer 14 mit einem darin untergebrachten Probenhalter 16 zur Aufnahme der Probe 12. Zur Temperierung der Probe 12 gemäß eines vorbestimmten Temperaturprogramms, in dessen Verlauf eine Temperatur T der Probe 12 verändert wird, umfasst die Vorrichtung 10 im dargestellten Beispiel eine elektrische Heizeinrichtung 18, die entsprechend des vorbestimmten Temperaturprogramms von einer zentralen Steuereinrichtung 20 der Vorrichtung 10 angesteuert wird.

Die Steuereinrichtung 20 ist als eine programmgesteuerte Steuereinrichtung (Mikrocontroller) ausgebildet und mit einer (nicht dargestellten) Mensch-Maschine-Schnittstelle ausgestattet, über welche ein Benutzer sowohl Details des Temperaturprogramms, z. B. eine Start- und eine Endtemperatur, als auch Details der Ansteuerung von nachfolgend noch beschriebenen Komponenten der Vorrichtung 10 vorgeben kann.

Zum Messen der Temperatur T der Probe 12 im Verlauf des Temperaturprogramms umfasst die Vorrichtung 10 ein in der Probenkammer 14 untergebrachtes Thermoelement 22, mittels welchem die Steuereinrichtung 20 eine Messung der Probentemperatur T vornimmt und zeitaufgelöste Daten betreffend die Temperatur in der Probenkammer 14 und mithin die Probentemperatur T in einer digitalen Speichereinrichtung der Steuereinrichtung 20 speichert.

Die an der Probe 12 durchgeführte thermische Analyse dient der Ermittlung wenigstens einer (von der Probentemperatur T verschiedenen) physikalischen Eigenschaft der Probe 12 in Abhängigkeit von der Probentemperatur T.

Hinsichtlich der Messung einer derartigen physikalischen Eigenschaft ist in Fig. 1 lediglich beispielhaft ein optischer Sender 24 und ein optischer Detektor 26 eingezeichnet, die ebenfalls wie dargestellt mit der Steuereinrichtung 20 verbunden sind, um eine entsprechende Messung der physikalischen Eigenschaft (z. B. optische Reflektivität, Längenänderung der Probe etc.) zu messen und zeitaufgelöste Daten betreffend diese physikalische Eigenschaft in der Speichereinrichtung der Steuereinrichtung 20 zu speichern.

Die in diesem Beispiel von den Komponenten 24 und 26 gebildete Messeinrichtung ist lediglich beispielhaft zu verstehen. In dieser Hinsicht kann zur Ausgestaltung der Messeinrichtung in Rahmen der Erfindung auf sämtliche aus dem Stand der Technik von thermischen Analysen bekannte Messeinrichtungen zurückgegriffen werden (z. B. auch zur Messung einer auf die Probe wirkenden Kraft oder zur Messung der Probenmasse etc.). Während oder nach Durchlauf des Temperaturprogramms können in der Steuereinrichtung 20 Daten betreffend die Temperaturabhängigkeit bzw. einen temperaturabhängigen Verlauf der betreffenden physikalischen Eigenschaft erzeugt, gespeichert, und dem Benutzer zu einer weitergehenden Auswertung bereitgestellt werden.

Grundsätzlich problematisch ist bei der Vorrichtung 10 die Genauigkeit der mittels des Thermoelements 22 realisierten Messung der Probentemperatur T. In der Praxis hat es sich als vorteilhaft herausgestellt, zumindest von Zeit zu Zeit (und/oder nach Änderung des Temperaturprogramms) eine Kalibrierung dieser Temperaturmesseinrichtung durchzuführen, um die Genauigkeit der damit erfolgenden Temperaturmessung zu erhöhen.

Zur Durchführung einer Kalibrierung der Temperaturmessung umfasst die Vorrichtung 10 Mittel zur Durchführung eines "Flash-Verfahrens" an einer von dem Probenhalter 16 gehaltenen Probe. Diese Mittel umfassen eine Bestrahlungsquelle 30 (hier z. B. ein von der Steuereinrichtung 20 gepulst angesteuerter Laser), mittels welcher eine erste Seite (in Fig. 1 Unterseite) der Probe mit elektromagnetischen Anregungspulsen beheizt wird, und eine Detektionseinrichtung 32 zum Detektieren einer Intensität einer von einer der ersten Seite der Probe entgegengesetzten zweiten Seite (in Fig. 1 Oberseite) der Probe infolge der Bestrahlung ausgehenden Wärmestrahlung.

Die Detektionseinrichtung 32 (hier z. B. ein IR-Detektor) ist wie dargestellt mit der Steuereinrichtung 20 verbunden, um ein für die Wärmestrahlungsintensität repräsentatives Detektorsignal an die Steuereinrichtung 20 zu liefern. Das mittels der Komponenten 30 und 32 realisierte Flash-Verfahren funktioniert wie folgt: Zunächst wird in den Probenhalter 16 eine plättchenförmige Probe eingelegt, von welcher der temperaturabhängige Verlauf der Temperaturleitfähigkeit $\alpha$ bekannt ist. Sodann werden durch die Steuereinrichtung 20 in Verbindung mit der Heizeinrichtung 18 entsprechend eines vorbestimmten Temperaturprogramms verschiedene Temperaturen in der Probenkammer 14 erzeugt bzw. angefahren und mittels des Thermoelements 22 gemessen. Beispielsweise kann es sich hierbei insbesondere um ein Durchlaufen desjenigen Temperaturprogramms handeln, mittels welchem nach Abschluss der Kalibrierung eine Probe 12 thermisch zu untersuchen ist. Im Verlauf des Temperaturprogramms wird die als "Temperaturmessreferenz" dienende Probe durch kurze Bestrahlungspulse der Bestrahlungsquelle 30 von der Unterseite her erwärmt. Jeder solche Bestrahlungspuls hat zur Folge, dass nach einem gewissen zeitlichen Versatz ein Temperaturanstieg auf der Oberseite der Probe resultiert. Aus dem transienten Verlauf des Temperaturanstiegs, der mittels der Detektionseinrichtung 22 vermessen wird, folgt unter Verwendung eines geeigneten, in der Steuereinrichtung 22 abgelegten bzw. benutzerseitig vorbestimmbaren mathematischen Modells und mit Kenntnis einer Dicke der Probe direkt die Temperaturleitfähigkeit $\alpha$ der Probe.

In der Steuereinrichtung 20 wird die detektierte Wärmestrahlungsintensität also ausgewertet, um (für jeden durch einen Bestrahlungspuls resultierenden Temperaturanstieg) die Temperaturleitfähigkeit $\alpha$ der Probe zu ermitteln und in Zuordnung zu der gleichzeitig mittels des Thermoelements 22 gemessenen Temperatur T abzuspeichern. Des Weiteren werden in der Steuereinrichtung 20 unter Verwendung der Daten, welche den temperaturabhängigen Verlauf der Temperaurleitfähigkeit der Probe angeben, Daten betreffend die Probentemperatur T erzeugt, so dass im Verlauf der Temperierung für eine Vielzahl von Probentemperaturen T Temperaturmessergebnisse einerseits von der mittels des Thermoelements 22 realisierten Temperaturmesseinrichtung und andererseits von der Temperaturmessung mittels des Flash-Verfahrens vorliegen. Anhand der Messergebnisse, die durch das Flash-Verfahren ermittelt wurden, erfolgt sodann die Kalibrierung der mit dem Thermoelement 22 realisierten Temperaturmesseinrichtung, so dass bei nachfolgenden Temperaturmessungen mittels des Thermoelements 22 genauere Messergebnisse für die Probentemperatur T geliefert werden. Konkret wird im dargestellten Beispiel bei dieser Kalibrierung die Charakteristik der Umsetzung einer von dem Thermoelement 22 gelieferten Thermospannung in die entsprechende Temperatur angepasst. Die der Kalibrierung zugrundeliegende Idee besteht somit darin, aus der Messung der Temperaturleitfähigkeit $\alpha$ einer Probe mit bekanntem temperaturabhängigen Verlauf der Temperaturleitfähigkeit $\alpha$ auf die Temperatur im Inneren der Probe zu schließen.

Vorteilhaft ergibt sich durch das Flash-Verfahren eine genauere Probentemperatur T mit geringer systematischer Abweichung, besserer Robustheit und Langzeitstabilität.

Abweichend von dem in Fig. 1 dargestellten Beispiel könnte die Messeinrichtung zur temperaturabhängigen Messung der genannten physikalischen Eigenschaft der Probe auch durch die (ohnehin vorhandenen) Mittel zur Durchführung des Flash-Verfahrens, hier also die Bestrahlungsquelle 30 und die Detektionseinrichtung 32, gebildet sein. In diesem Fall kann die Vorrichtung 10 z. B. zur temperaturabhängigen Vermessung von Temperaturleitfähigkeiten $\alpha$ an verschiedenen Proben 12 dienen. Auch dann kann die Steuereinrichtung 22 in Verbindung mit den Komponenten 30 und 32 dazu ausgebildet sein, das beschriebene Verfahren zur Kalibrierung der mit dem Thermoelement 22 ausgebildeten Temperaturmesseinrichtung durchzuführen.

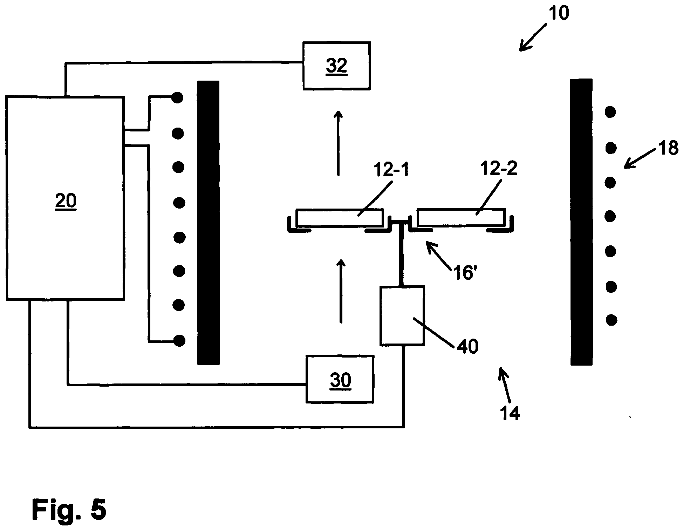

Abweichend von dem in Fig. 1 dargestellten Beispiel kann bei der Vorrichtung 10 sogar auf eine "konventionelle" Temperaturmesseinrichtung (hier: Thermoelement 22) ganz verzichtet werden. Ein solches Beispiel einer Vorrichtung wird unten mit Bezug auf Fig. 5 noch beschrieben.

Nachfolgend werden einige Aspekte betreffend die Genauigkeit des im Rahmen der Erfindung eingesetzten "Temperaturleitfähigkeit-Thermometers" (gebildet aus den Komponenten 30, 32 und 20) erläutert.

Die Genauigkeit wird in Form in einer Unsicherheit "u" betrachtet. Eine Unsicherheit u(T) der mittels des Flash-Verfahrens ermittelten Probentemperatur T lässt sich wie folgt ausdrücken:

$$u(T) = (d\alpha/dT)^{-1} \times u(\alpha) \qquad \text{(Gleichung 1)}$$

wobei bezeichnen:

u(T) die Unsicherheit der Temperatur T, und
da/dT die Steigung der temperaturabhängigen Temperaturleitfähigkeit a.

Aus Gleichung 1 ist ersichtlich, dass die zu erwartende Unsicherheit u(T) umso kleiner ist, je stärker $\alpha$ von T abhängt. Für viele Materialien ist dies hin zu tieferen Temperaturen T immer stärker der Fall, was in Fig. 2 anhand einiger Beispielmaterialien veranschaulicht ist.

Fig. 2 zeigt eine Auftragung der Temperaturleitfähigkeit $\alpha$ in Abhängigkeit von der Temperatur T für eine Reihe von verschiedenen Materialien M1 (Wolfram), M2 (Molybdän, Typ "SRM781"), M3 (Graphit), M4 (Eisen) und M5 (Silizium).

Die hier beispielhaft genannten Materialien M1 bis M5 eigenen sich allesamt zur Verwendung im Rahmen der vorliegenden Erfindung, insbesondere bei Temperaturen T von weniger als 1000 K.

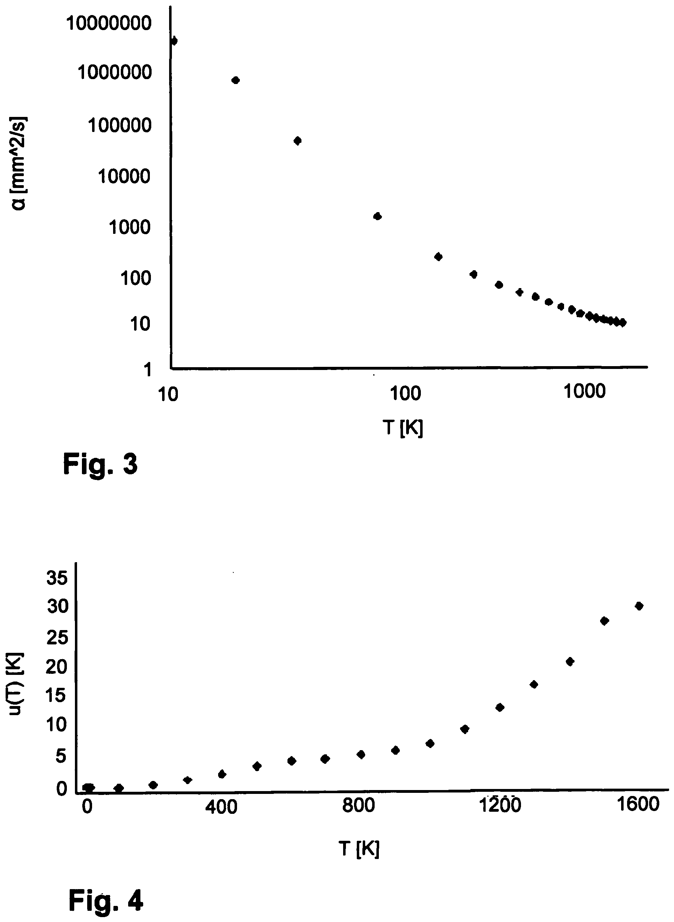

In Fig. 3 ist in einer doppelt-logarithmischen Auftragung nochmals die Temperaturleitfähigkeit $\alpha$ von Silizium (Material M5) in Abhängigkeit von der Temperatur T für einen größeren Temperaturbereich dargestellt.

Daraus ist ersichtlich, dass die Verwendung von Silizium zur Temperaturmessung mittels des Flash-Verfahrens bis hin zu sehr niedrigen Temperaturen T vorteilhaft ist. Die Temperaturleitfähigkeit $\alpha$ steigt mit absinkender Temperatur zwischen Raumtemperatur (ca. 300 K) und 10 K um etwa fünf Größenordnungen an.

In einer Ausführungsform ist daher vorgesehen, als Material der für diese Temperaturmessung verwendeten Probe Silizium vorzusehen.

Nochmals zurückkommend auf die oben angegebene Gleichung 1 ist daraus außerdem ersichtlich, dass die Unsicherheit u(T) umso kleiner ist, je kleiner die Unsicherheit u(a) der Temperaturleitfähigkeit $\alpha$ ist. Ermittelt man die Probentemperatur T aus dem Vergleich einer im Flash-Verfahren gemessenen Temperaturleitfähigkeit $\alpha_{mess}$ mit entsprechenden Literaturwerten $\alpha_{lit}$, so ist für u(a) folgendes anzunehmen:

$$u(\alpha) = \sqrt{u^2(\alpha)_{lit} + u^2(\alpha)_{mess}} \qquad \text{(Gleichung 2)}$$

wobei bezeichnen:

u($\alpha$)$_{lit}$ die Unsicherheit der Temperaturleitfähigkeit $\alpha_{lit}$ (Literaturwerte), und
u($\alpha$)$_{mess}$ die Unsicherheit der Temperaturleitfähigkeit $\alpha_{mess}$ (Messwerte).

Die Unsicherheit u($\alpha$)$_{lit}$ der Literaturwerte liegt typischerweise im Bereich zwischen 5 % und 15 %, wohingegen die Unsicherheit u($\alpha$)$_{mess}$ der gemessenen Temperaturleitfähigkeit $\alpha_{mess}$ typischerweise im Bereich von ca. 3 % liegt.

In diesem Fall wird die insgesamt resultierende Unsicherheit u(a) des "Temperaturleitfähigkeits-Thermometers" maßgeblich durch die Unsicherheit u($\alpha$)$_{lit}$ der Literaturwerte (bzw. der bei der Erfindung von den "Daten" repräsentierten Werte) der Temperaturleitfähigkeit $\alpha$ bestimmt.

In einer Weiterbildung der Erfindung ist vorgesehen, dass das Temperaturleitfähigkeits-Thermometer über ein kalibriertes anderes Thermometer kalibriert wird.

In einer weiteren Ausführung werden mehrere Temperaturleitfähigkeits-Thermometer gleichen Typs über ein kalibriertes weiteres Thermometer kalibriert, um eine gemittelte "Masterkurve" <a(T)> des Temperaturleitfähigkeits-Thermometer-Typs zu erhalten. Dadurch lassen sich systematische Unsicherheiten, z. B. aufgrund der Unsicherheit der Probendicke, aber auch Unsicherheiten aufgrund endlicher Reproduzierbarkeit der Temperaturleitfähigkeitsmessung verringern. Mit einer solchen Ausführung reduziert sich die Unsicherheit u(a) auf:

$$u(\alpha) = \sqrt{u^2(\alpha)_{kal} + u^2(\alpha)_{repr}} \qquad \text{(Gleichung 3)}$$

wobei in u($\alpha$)$_{kal}$ die Unsicherheiten der Kalibrierung des Temperaturleitfähigkeits-Thermometers zusammengefasst sind, und u($\alpha$)$_{repr}$ die Unsicherheit aufgrund endlicher Reproduzierbarkeit der Temperaturleitfähigkeitsmessung beim Auslesen des Temperaturleitfähigkeits-Thermometers ist. Letzteres kann in einer weiteren Ausführung dadurch reduziert werden, dass beim Auslesen über mehrere Temperaturleitfähigkeits-Thermometer gleichen Typs gemittelt wird (was z. B. unter Verwendung eines ansteuerbaren, insbesondere mittels einer Steuereinrichtung der Vorrichtung automatisiert ansteuerbaren Probenwechslers sehr praktikabel ist) und/oder über mehrere Messungen an einem Temperaturleitfähigkeits-Thermometer gemittelt wird.

Insgesamt kann dadurch für u(a) ein Wert von etwa 1 % des Messwertes $\alpha$ angestrebt werden. Nimmt man u(a) = 1 % $\times$ $\alpha$ an, so ergibt sich die in Fig. 4 dargestellte Unsicherheit u(T) des Temperaturleitfähigkeits-Thermometers im Falle von Silizium als "Thermometermaterial" (Material der dem Flash-Verfahren unterzogenen Probe).

Daraus ist zu erkennen, dass im Temperaturbereich unterhalb Raumtemperatur (ca. 300 K) eine Unsicherheit u(T) von weniger als 1 K erzielt werden kann.

Fig. 5 zeigt eine Vorrichtung 10 zur thermischen Analyse einer Probe gemäß eines modifizierten Ausführungsbeispiels.

Eine erste (optionale) Modifikation gegenüber dem Beispiel gemäß Fig. 1 besteht darin, dass die Vorrichtung 10 in einem temperierbaren Probenraum 14 einen ansteuerbaren Mehrfach-Probenhalter 16' mit mehreren Aufnahmen zur dementsprechenden Aufnahme mehrerer Proben aufweist. In Fig. 5 sind beispielhaft zwei solche Aufnahmen zur Aufnahme zweier Proben 12-1 und 12-2 gezeigt. Der automatische Probenwechsler 16' ist im Verlauf des Temperaturprogramms über einen elektrischen Antrieb 40 derart ansteuerbar (hier drehbar), dass damit jeweils eine gewünschte der Proben 12-1 und 12-2 in den Strahlengang des aus einer Bestrahlungsquelle 30 und einer Detektionseinrichtung 32 gebildeten "Temperaturleitfähigkeits-Thermometers" gebracht werden kann.

Eine zweite (optionale) Modifikation der in Fig. 5 gezeigten Vorrichtung 10 besteht darin, dass auf die Anordnung und den Betrieb einer konventionellen Temperaturmessenrichtung (vgl. Thermoelement 22 in Fig. 1) verzichtet ist, und stattdessen für die Temperaturmessung betriebsmäßig lediglich im Verlauf des Temperaturprogramms wenigstens eine der Proben 12-1 und 12-2 mittels des automatischen Probenwechslers 16 in den Strahlengang des aus den Komponenten 30 und 32 gebildeten Temperaturleitfähigkeits-Thermometers gebracht wird, um in oben bereits beschriebener Weise eine aktuelle Temperatur T in der Probenkammer 14 zu ermitteln.

Abweichend von dem dargestellten Mehrfach-Probenhalter 16' mit lediglich zwei Probenaufnahmen, könnte der Probenhalter auch zur Aufnahme von wenigstens drei (oder noch mehr) Proben ausgebildet sein. Dies besitzt z. B. den Vorteil, dass im Verlauf einer thermischen Analyse an einer Probe mit unbekannter Temperaturabhängigkeit der Temperaturleitfähigkeit mehrere "weitere Proben" mit bekannter solcher Temperaturabhängigkeit als Temperaturleitfähigkeits-Thermometer genutzt werden können, wobei durch eine Mehrzahl derartiger weiterer Proben eine vorteilhafte Redundanz der Temperaturmessung geschaffen wird (z. B. indem als ermittelte Temperatur ein Mittelwert der einzelnen Ergebnisse der Temperaturmessungen verwendet wird).

**Patentansprüche**

**1.** Verfahren zur thermischen Analyse einer Probe (12), umfassend:

- Temperieren der Probe (12) gemäß eines Temperaturprogramms, in dessen Verlauf eine Temperatur (T) der Probe (12) verändert wird,
- Messen der Temperatur (T) der Probe (12) im Verlauf des Temperaturprogramms,
- Messen wenigstens einer von der Temperatur (T) der Probe (12) verschiedenen physikalischen Eigenschaft der Probe (12) im Verlauf des Temperaturprogramms,

**dadurch gekennzeichnet, dass** das Messen der Temperatur (T) der Probe (12) umfasst:

- Bestrahlen eines ersten Oberflächenbereichs der Probe (12) mit einem elektromagnetischen Anregungsstrahl, Detektieren einer Intensität einer von einem zweiten Oberflächenbereich der Probe (12) infolge der Bestrahlung ausgehenden Wärmestrahlung,
- Ermitteln einer Temperaturleitfähigkeit (a) der Probe (12) durch Auswerten der detektierten Intensität der Wärmestrahlung,
- Ermitteln der Temperatur der Probe (12) anhand der ermittelten Temperaturleitfähigkeit (a) unter Verwendung von Daten, welche den temperaturabhängigen Verlauf der Temperaturleitfähigkeit (a) der Probe (12) angeben.

2. Verfahren zur thermischen Analyse einer Probe (12-1), umfassend:

- Temperieren der Probe (12-1) gemäß eines Temperaturprogramms, in dessen Verlauf eine Temperatur (T) der Probe (12-1) verändert wird,
- Messen der Temperatur (T) der Probe (12-1) im Verlauf des Temperaturprogramms,
- Messen wenigstens einer von der Temperatur (T) der Probe (12-1) verschiedenen physikalischen Eigenschaft der Probe (12-1) im Verlauf des Temperaturprogramms,

**dadurch gekennzeichnet, dass** das Messen der Temperatur (T) der Probe (12-1) umfasst:

- Anordnen einer weiteren Probe (12-2) benachbart der Probe (12-1), um die Probe (12-1) und die weitere Probe (12-2) gemeinsam der Temperierung zu unterziehen,
- Bestrahlen eines ersten Oberflächenbereichs der weiteren Probe (12-2) mit einem elektromagnetischen Anregungsstrahl, Detektieren einer Intensität einer von einem zweiten Oberflächenbereich der weiteren Probe (12-2) infolge der Bestrahlung ausgehenden Wärmestrahlung,
- Ermitteln einer Temperaturleitfähigkeit der weiteren Probe (12-2) durch Auswerten der detektierten Intensität der Wärmestrahlung,
- Ermitteln der Temperatur der Probe (12-1) anhand der ermittelten Temperaturleitfähigkeit (a) der weiteren Probe (12-2) unter Verwendung von Daten, welche den temperaturabhängigen Verlauf der Temperaturleitfähigkeit (a) der weiteren Probe (12-2) angeben.

3. Verfahren zur Kalibrierung eines in einer Vorrichtung (10) zur thermischen Analyse einer Probe (12) zur Messung einer Temperatur (T) der Probe (12) verwendeten Temperaturmesseinrichtung (22), umfassend:

- Anordnen einer Probe (12) in der Vorrichtung (10) zur thermischen Analyse,
- Temperieren der Probe (12) gemäß eines Temperaturprogramms, in dessen Verlauf eine Temperatur (T) der Probe (12) verändert wird,
- Messen der Temperatur (T) der Probe (12) im Verlauf des Temperaturprogramms mittels der Temperaturmesseinrichtung (22),
- Messen der Temperatur (T) der Probe (12) im Verlauf des Temperaturprogramms durch folgende Schritte:

- Bestrahlen eines ersten Oberflächenbereichs der Probe (12) mit einem elektromagnetischen Anregungsstrahl, Detektieren einer Intensität einer von einem zweiten Oberflächenbereich der Probe (12) infolge der Bestrahlung ausgehenden Wärmestrahlung,
- Ermitteln einer Temperaturleitfähigkeit (a) der Probe (12) durch Auswerten der detektierten Intensität der Wärmestrahlung,
- Ermitteln der Temperatur (T) der Probe (12) anhand der ermittelten Temperaturleitfähigkeit (a) unter Verwendung von Daten, welche den temperaturabhängigen Verlauf der Temperaturleitfähigkeit (a) der Probe (12) angeben.

- Kalibrieren der Temperaturmesseinrichtung (22) anhand eines Vergleiches von Ergebnissen der beiden Messungen der Temperatur (T) der Probe (12).

4. Vorrichtung (20, 14, 16, 18, 30, 32) zur Durchführung eines Verfahrens nach Anspruch 1, umfassend:

- eine Probenkammer (14) mit einem darin untergebrachten Probenhalter (16) zum Anordnen einer Probe (12) in der Probenkammer (14),
- eine Temperierungseinrichtung umfassend eine Heizeinrichtung (18) und/oder eine Kühleinrichtung zum Temperieren der Probe (12) gemäß eines Temperaturprogramms, in dessen Verlauf eine Temperatur (T) der Probe (12) verändert wird,
- eine Messeinrichtung (20) zum Messen wenigstens einer von der Temperatur (T) der Probe (12) verschiedenen physikalischen Eigenschaft der Probe (12) im Verlauf des Temperaturprogramms,
- eine Bestrahlungsquelle (30) zum Bestrahlen eines ersten Oberflächenbereichs der Probe (12) mit einem elektromagnetischen Anregungsstrahl,
- eine Detektionseinrichtung (32) zum Detektieren einer Intensität einer von einem zweiten Oberflächenbereich der Probe (12) infolge der Bestrahlung ausgehenden Wärmestrahlung,
- eine programmgesteuerte Auswerteeinrichtung (20) zum Ermitteln einer Temperaturleitfähigkeit (a) der Probe (12) durch Auswerten der detektierten Intensität der Wärmestrahlung, aufweisend eine Speichereinheit zum Speichern von Daten, welche den temperaturabhängigen Verlauf der Temperaturleitfähigkeit (a) der Probe (12) angeben, wobei die Auswerteeinrichtung (20) ferner dazu ausgebildet ist, die Temperatur (T) der Probe (12) anhand der ermittelten Temperaturleitfähigkeit (a) unter Verwendung der genannten Daten zu ermitteln.

5. Vorrichtung (20, 14, 16, 18, 30, 32) zur Durchführung eines Verfahrens nach Anspruch 2, umfassend:

- eine Probenkammer (14) mit einem darin untergebrachten Probenhalter (16) zum Anordnen einer Probe (12-1) in der Probenkammer (14), wobei der Probenhalter (16) als ein Mehrfach-Probenhalter (16') zur Aufnahme der Probe (12-1) und einer weiteren Probe (12-2) ausgebildet ist oder in der Probenkammer (14) ein weiterer Probenhalter zur Aufnahme der weiteren Probe (12-2) untergebracht ist,
- eine Temperierungseinrichtung umfassend eine Heizeinrichtung (18) und/oder eine Kühleinrichtung zum gemeinsamen Temperieren der Probe (12-1) und der weiteren Probe (12-2) gemäß eines Temperaturprogramms, in dessen Verlauf eine Temperatur (T) der Probe (12-1) und der weiteren Probe (12-2) verändert wird,
- eine Messeinrichtung (20) zum Messen wenigstens einer von der Temperatur (T) der Probe (12-1) verschiedenen physikalischen Eigenschaft der Probe (12-1) im Verlauf des Temperaturprogramms,
- eine Bestrahlungsquelle (30) zum Bestrahlen eines ersten Oberflächenbereichs der weiteren Probe (12-2) mit einem elektromagnetischen Anregungsstrahl,
- eine Detektionseinrichtung (32) zum Detektieren einer Intensität einer von einem zweiten Oberflächenbereich der weiteren Probe (12-2) infolge der Bestrahlung ausgehenden Wärmestrahlung,
- eine programmgesteuerte Auswerteeinrichtung (20) zum Ermitteln einer Temperaturleitfähigkeit (a) der weiteren Probe (12-2) durch Auswerten der detektierten Intensität der Wärmestrahlung, aufweisend eine Speichereinheit zum Speichern von Daten, welche den temperaturabhängigen Verlauf der Temperaturleitfähigkeit (a) der weiteren Probe (12-2) angeben, wobei die Auswerteeinrichtung (20) ferner dazu ausgebildet ist, die Temperatur (T) der Probe (12) anhand der ermittelten Temperaturleitfähigkeit (a) der weiteren Probe (12-2) unter Verwendung der genannten Daten zu ermitteln.

6. Vorrichtung (20, 14, 16, 18, 22, 30, 32) zur Durchführung eines Verfahrens nach Anspruch 3, umfassend:

- eine Probenkammer (14) mit einem darin untergebrachten Probenhalter (16) zum Anordnen einer Probe (12) in der Probenkammer (14),
- eine Temperierungseinrichtung umfassend eine Heizeinrichtung (18) und/oder eine Kühleinrichtung zum Temperieren der Probe (12) gemäß eines Temperaturprogramms, in dessen Verlauf eine Temperatur (T) der Probe (12) verändert wird,
- eine Temperaturmesseinrichtung (22) zum Messen der Temperatur (T) der Probe (12) im Verlauf des Temperaturprogramms,
- eine Messeinrichtung (20) zum Messen wenigstens einer von der Temperatur (T) der Probe (12) verschiedenen physikalischen Eigenschaft der Probe (12) im Verlauf des Temperaturprogramms,
- eine Bestrahlungsquelle (30) zum Bestrahlen eines ersten Oberflächenbereichs der Probe (12) mit einem elektromagnetischen Anregungsstrahl,
- eine Detektionseinrichtung (32) zum Detektieren einer Intensität einer von einem zweiten Oberflächenbereich der Probe (12) infolge der Bestrahlung ausgehenden Wärmestrahlung,
- eine programmgesteuerte Auswerteeinrichtung (20), aufweisend eine Speichereinheit zum Speichern von Daten, welche den temperaturabhängigen Verlauf der Temperaturleitfähigkeit (a) der Probe (12) angeben, und ausgebildet zur Durchführung folgender Schritte:

- Ermitteln einer Temperaturleitfähigkeit (a) der Probe (12) durch Auswerten der detektierten Intensität der Wärmestrahlung,
- Ermitteln der Temperatur (T) der Probe (12) einerseits anhand der ermittelten Temperaturleitfähigkeit (a) unter Verwendung der genannten Daten und andererseits mittels der Temperaturmesseinrichtung (22),
- Kalibrieren der Temperaturmesseinrichtung (22) anhand eines Vergleiches von Ergebnissen der beiden Messungen der Temperatur (T) der Probe (12).

7. Computerprogrammprodukt umfassend einen Programmcode, der auf einer Datenverarbeitungseinrichtung (20) einer Vorrichtung (20, 14, 16, 18, 22, 30, 32) nach einem der Ansprüche 4, 5 oder 6 ausgeführt die Durchführung eines betreffenden Verfahrens nach einem der Ansprüche 1 bis 3 steuert.

**Claims**

1. A method for the thermal analysis of a sample (12), comprising:

- controlling the temperature of the sample (12) according to a temperature program, in the course of which a temperature (T) of the sample (12) is changed,
- measuring the temperature (T) of the sample (12) in the course of the temperature program,
- measuring at least one physical property of the sample (12), which differs from the temperature (T) of the sample (12), in the course of the temperature program,

**characterized in that** the measuring of the temperature (T) of the sample (12) comprises:

- irradiating a first surface region of the sample (12) with an electromagnetic excitation beam, detecting an intensity of a thermal radiation emanating from a second surface region of the sample (12) as a result of the irradiation,
- determining a temperature conductivity ($\alpha$) of the sample (12) by evaluating the detected intensity of the thermal radiation,
- determining the temperature of the sample (12) by means of the determined temperature conductivity ($\alpha$) by using data indicating the temperature-dependent course of the temperature conductivity ($\alpha$) of the sample (12) .

2. A method for the thermal analysis of a sample (12-1), comprising:

- controlling the temperature of the sample (12-1) according to a temperature program, in the course of which a temperature (T) of the sample (12-1) is changed,
- measuring the temperature (T) of the sample (12-1) in the course of the temperature program,
- measuring at least one physical property of the sample (12-1), which differs from the temperature (T) of the sample (12-1), in the course of the temperature program,

**characterized in that** the measuring of the temperature (T) of the sample (12-1) comprises:

- arranging a further sample (12-2) adjacent to the sample (12-1) in order to jointly subject the sample (12-1) and the further sample (12-2) to the temperature control,
- irradiating a first surface region of the further sample (12-2) with an electromagnetic excitation beam, detecting an intensity of a thermal radiation emanating from a second surface region of the further sample (12-2) as a result of the irradiation,
- determining a temperature conductivity of the further sample (12-2) by evaluating the detected intensity of the thermal radiation,
- determining the temperature of the sample (12-1) by means of the determined temperature conductivity ($\alpha$) of the further sample (12-2) by using data indicating the temperature-dependent course of the temperature conductivity ($\alpha$) of the further sample (12-2).

3. A method for calibrating a temperature measuring means (22) used in a device (10) for the thermal analysis of a sample (12) for measuring a temperature (T) of the sample (12), comprising:

- arranging a sample (12) in the device (10) for the thermal analysis,
- controlling the temperature of the sample (12) according to a temperature program, in the course of which a temperature (T) of the sample (12) is changed,
- measuring the temperature (T) of the sample (12) in the course of the temperature program by means of the temperature measuring means (22),
- measuring the temperature (T) of the sample (12) in the course of the temperature program by means of the following steps:

  - irradiating a first surface region of the sample (12) with an electromagnetic excitation beam, detecting an intensity of a thermal radiation emanating from a second surface region of the sample (12) as a result of the irradiation,
  - determining a temperature conductivity ($\alpha$) of the sample (12) by evaluating the detected intensity of the thermal radiation,
  - determining the temperature (T) of the sample (12) by means of the determined temperature conductivity ($\alpha$) by using data indicating the temperature-dependent course of the temperature conductivity ($\alpha$) of the sample (12),

- calibrating the temperature measuring means (22) by means of a comparison of results of the two measurements of the temperature (T) of the sample (12).

4. A device (20, 14, 16, 18, 30, 32) for performing a method according to claim 1, comprising:

   - a sample chamber (14) comprising a sample holder (16) accommodated therein for arranging a sample (12) in the sample chamber (14),
   - a temperature control means comprising a heating means (18) and/or a cooling means for controlling the temperature of the sample (12) according to a temperature program, in the course of which a temperature (T) of the sample (12) is changed,
   - a measuring means (20) for measuring at least one physical property of the sample (12), which differs from the temperature (T) of the sample (12), in the course of the temperature program,
   - an irradiation source (30) for irradiating a first surface region of the sample (12) with an electromagnetic excitation beam,
   - a detection means (32) for detecting an intensity of a thermal radiation emanating from a second surface region of the sample (12) as a result of the irradiation,
   - a program-controlled evaluation means (20) for determining a temperature conductivity ($\alpha$) of the sample (12) by evaluating the detected intensity of the thermal radiation, having a storage unit for storing data indicating the temperature-dependent course of the temperature conductivity ($\alpha$) of the sample (12), wherein the evaluation means (20) is further formed to determine the temperature (T) of the sample (12) by means of the determined temperature conductivity ($\alpha$) using the mentioned data.

5. A device (20, 14, 16, 18, 30, 32) for performing a method according to claim 2, comprising:

   - a sample chamber (14) comprising a sample holder (16) accommodated therein for arranging a sample (12-1) in the sample chamber (14), wherein the sample holder (16) is formed as multiple sample holder (16') for receiving the sample (12-1) and a further sample (12-2), or a further sample holder for receiving the further sample (12-2) is accommodated in the sample chamber (14),
   - a temperature control means comprising a heating means (18) and/or a cooling means for jointly controlling the temperature of the sample (12-1) and of the further sample (12-2) according to a temperature program, in the course of which a temperature (T) of the sample (12-1) and of the further sample (12-2) is changed,
   - a measuring means (20) for measuring at least one physical property of the sample (12-1), which differs from the temperature (T) of the sample (12-1), in the course of the temperature program,
   - an irradiation source (30) for irradiating a first surface region of the further sample (12-2) with an electromagnetic excitation beam,
   - a detection means (32) for detecting an intensity of a thermal radiation emanating from a second surface region of the further sample (12-2) as a result of the irradiation,
   - a program-controlled evaluation means (20) for determining a temperature conductivity ($\alpha$) of the further sample (12-2) by evaluating the detected intensity of the thermal radiation, having a storage unit for storing data indicating the temperature-dependent course of the temperature conductivity ($\alpha$) of the further sample (12-2), wherein the evaluation means (20) is further formed to determine the temperature (T) of the sample (12) by means of the determined temperature conductivity (α) of the further sample (12-2) using the mentioned data.

6. A device (20, 14, 16, 18, 22, 30, 32) for performing a method according to claim 3, comprising:

- a sample chamber (14) comprising a sample holder (16) accommodated therein for arranging a sample (12) in the sample chamber (14),
- a temperature control means comprising a heating means (18) and/or a cooling means for controlling the temperature of the sample (12) according to a temperature program, in the course of which a temperature (T) of the sample (12) is changed,
- a temperature measuring means (22) for measuring the temperature (T) of the sample (12) in the course of the temperature program,
- a measuring means (20) for measuring at least one physical property of the sample (12), which differs from the temperature (T) of the sample (12), in the course of the temperature program,
- an irradiation source (30) for irradiating a first surface region of the sample (12) with an electromagnetic excitation beam,
- a detection means (32) for detecting an intensity of a thermal radiation emanating from a second surface region of the sample (12) as a result of the irradiation,
- a program-controlled evaluation means (20) having a storage unit for storing data indicating the temperature-dependent course of the temperature conductivity (α) of the sample (12), and formed for performing the following steps:
- determining a temperature conductivity (α) of the sample (12) by evaluating the detected intensity of the thermal radiation,
- determining the temperature (T) of the sample (12) by means of the determined temperature conductivity (α) by using the mentioned data on the one hand and by means of the temperature measuring means (22) on the other hand,
- calibrating the temperature measuring means (22) by means of a comparison of results of the two measurements of the temperature (T) of the sample (12).

7. A computer program product comprising a program code, which, executed on a data processing means (20) of a device (20, 14, 16, 18, 22, 30, 32) according to one of claims 4, 5, or 6, controls the performance of a respective method according to one of claims 1 to 3.

**Revendications**

1. Procédé, destiné à l'analyse thermique d'un échantillon (12), comprenant les étapes consistant à :

- tempérer l'échantillon (12) selon un programme de températures, au cours duquel l'on fait varier une température (T) de l'échantillon (12),
- mesurer la température (T) de l'échantillon (12) au cours du programme de températures,
- mesurer au moins une propriété physique de l'échantillon (12) qui est différente de la température (T) de l'échantillon (12) au cours du programme de températures,

**caractérisé en ce que** la mesure de la température (T) de l'échantillon (12) comprend les étapes consistant à :

- irradier une première zone superficielle de l'échantillon (12) avec un faisceau d'excitation électromagnétique, détecter une intensité d'un rayonnement thermique émanant d'une deuxième zone superficielle de l'échantillon (12) suite à l'irradiation,
- déterminer une conductibilité thermique (a) de l'échantillon (12) par évaluation de l'intensité détectée du rayonnement thermique,
- déterminer la température de l'échantillon (12) à l'aide de la conductibilité thermique (α) déterminée, en utilisant des données qui indiquent la courbe de la conductibilité thermique (a) de l'échantillon (12) dépendant de la température.

2. Procédé, destiné à l'analyse thermique d'un échantillon (12-1), comprenant les étapes consistant à :

- tempérer l'échantillon (12-1) selon un programme de températures, au cours duquel l'on fait varier une température (T) de l'échantillon (12-1),

- mesurer la température (T) de l'échantillon (12-1) au cours du programme de températures,
- mesurer au moins une propriété physique de l'échantillon (12-1) qui est différente de la température (T) de l'échantillon (12-1) au cours du programme de températures,

**caractérisé en ce que** la mesure de la température (T) de l'échantillon (12-1) comprend les étapes consistant à :

- placer un échantillon (12-2) supplémentaire au voisinage de l'échantillon (12-1), pour tempérer conjointement l'échantillon (12-1) et l'échantillon (12-2) supplémentaire,
- irradier une première zone superficielle de l'échantillon (12-2) supplémentaire avec un faisceau d'excitation électromagnétique, détecter une intensité d'un rayonnement thermique émanant d'une deuxième zone superficielle de l'échantillon (12-2) supplémentaire suite à l'irradiation,
- déterminer une conductibilité thermique de l'échantillon (12-2) supplémentaire par évaluation de l'intensité détectée du rayonnement thermique,
- déterminer la température de l'échantillon (12-1) à l'aide de la conductibilité thermique (a) déterminée de l'échantillon (12-2) supplémentaire, en utilisant des données qui indiquent la courbe de la conductibilité thermique (a) de l'échantillon (12-2) supplémentaire dépendant de la température.

3. Procédé, destiné à calibrer un système de mesure de la température (22) utilisé dans un dispositif (10) d'analyse thermique d'un échantillon (12) pour mesurer une température (T) de l'échantillon (12), comprenant les étapes consistant à :

- placer un échantillon (12) dans le dispositif (10) d'analyse thermique,
- tempérer l'échantillon (12) selon un programme de températures, au cours duquel l'on fait varier une température (T) de l'échantillon (12),
- mesurer la température (T) de l'échantillon (12) au cours du programme de températures à l'aide du système de mesure de la température (22),
- mesurer la température (T) de l'échantillon (12) au cours du programme de températures, par les étapes suivantes, consistant à :

  - irradier une première zone superficielle de l'échantillon (12) avec un faisceau d'excitation électromagnétique, détecter une intensité d'un rayonnement thermique émanant d'une deuxième zone superficielle de l'échantillon (12) suite à l'irradiation,
  - déterminer une conductibilité thermique (a) de l'échantillon (12) par détection de l'intensité du rayonnement thermique,
  - déterminer la température (T) de l'échantillon (12) à l'aide de la conductibilité thermique (a) déterminée, en en utilisant des données qui indiquent la courbe de la conductibilité thermique (a) de l'échantillon (12) dépendant de la température,

- calibrer le système de mesure de la température (22) par une comparaison de résultats des deux mesures de la température (T) de l'échantillon (12).

4. Dispositif (20, 14, 16, 18, 30, 32), destiné à réaliser un procédé selon la revendication 1, comprenant :

- un compartiment à échantillons (14) doté d'un porte-échantillons (16) logé en son intérieur, destiné à placer un échantillon (12) dans le compartiment à échantillons (14),
- un système régulateur de température comprenant un système de chauffage (18) et/ou un système de refroidissement pour tempérer l'échantillon (12) selon un programme de températures, au cours duquel l'on fait varier une température (T) de l'échantillon (12),
- un système de mesure (20), destiné à mesurer au moins une propriété physique de l'échantillon (12) qui est différente de la température (T) de l'échantillon (12) au cours du programme de températures,
- une source d'irradiation (30), destinée à irradier une première zone superficielle de l'échantillon (12) avec un faisceau d'excitation électromagnétique,
- un système de détection (32), destiné à détecter une intensité d'un rayonnement thermique émanant d'une deuxième zone superficielle de l'échantillon (12) suite à l'irradiation,
- un système d'évaluation (20) commandé par programme, destiné à déterminer une conductibilité thermique (a) de l'échantillon (12) par évaluation de l'intensité détectée du rayonnement thermique, comportant une unité de mémoire pour la mémorisation de données qui indiquent la courbe de la conductibilité thermique (a) de l'échantillon (12) dépendant de la température, le système d'évaluation (20) étant conçu par ailleurs pour déterminer la température (T) de l'échantillon (12) à l'aide de la conductibilité thermique ($\alpha$) déterminée, en utilisant les données citées.

5. Dispositif (20, 14, 16, 18, 30, 32), destiné à réaliser un procédé selon la revendication 2, comprenant :

- un compartiment à échantillons (14) doté d'un porte-échantillons (16) logé en son intérieur, destiné à placer un échantillon (12-1) dans le compartiment à échantillons (14), le porte-échantillons (16) étant conçu sous la forme d'un porte-échantillons (16') multiple, destiné à recevoir l'échantillon (12-1) et un échantillon (12-2) supplémentaire ou dans le compartiment à échantillons (14) étant logé un porte-échantillons supplémentaire, destiné à recevoir l'échantillon (12-2) supplémentaire,
- un système régulateur de température, comprenant un système de chauffage (18) et/ou un système de refroidissement, pour tempérer conjointement l'échantillon (12-1) et l'échantillon (12-2) supplémentaire selon un programme de températures, au cours duquel l'on fait varier une température (T) de l'échantillon (12-1) et de l'échantillon (12-2) supplémentaire,
- un système de mesure (20), destiné à mesurer au moins une propriété physique de l'échantillon (12-1) qui est différente de la température (T) de l'échantillon (12-1) au cours du programme de températures,
- une source d'irradiation (30), destinée à irradier une première zone superficielle de l'échantillon (12-2) supplémentaire avec un faisceau d'excitation électromagnétique,
- un système de détection (32), destiné à détecter une intensité d'un rayonnement thermique émanant d'une deuxième zone superficielle de l'échantillon (12-2) supplémentaire suite à l'irradiation,
- un système d'évaluation (20) commandé par programme, destiné à déterminer une conductibilité thermique (a) de l'échantillon (12-2) supplémentaire par évaluation de l'intensité détectée du rayonnement thermique, comportant une unité de mémoire pour la mémorisation de données qui indiquent la courbe de la conductibilité thermique (a) de l'échantillon (12-2) dépendant de la température, le système d'évaluation (20) étant conçu par ailleurs pour déterminer la température (T) de l'échantillon (12) à l'aide de la conductibilité thermique (a) déterminée de l'échantillon (12-2) supplémentaire, en utilisant les données citées.

6. Dispositif (20, 14, 16, 18, 22, 30, 32), destiné à réaliser un procédé selon la revendication 3, comprenant :

- un compartiment à échantillons (14) doté d'un porte-échantillons (16) logé en son intérieur, destiné à placer un échantillon (12) dans le compartiment à échantillons (14),
- un système régulateur de température comprenant un système de chauffage (18) et/ou un système de refroidissement pour tempérer l'échantillon (12) selon un programme de températures, au cours duquel l'on fait varier une température (T) de l'échantillon (12),
- un système de mesure de la température (22), destiné à mesurer la température (T) de l'échantillon (12) au cours du programme de températures,
- un système de mesure (20), destiné à mesurer au moins une propriété physique de l'échantillon (12) qui est différente de la température (T) de l'échantillon (12) au cours du programme de températures,
- une source d'irradiation (30), destinée à irradier une première zone superficielle de l'échantillon (12) avec un faisceau d'excitation électromagnétique,
- un système de détection (32), destiné à détecter une intensité d'un rayonnement thermique émanant d'une deuxième zone superficielle de l'échantillon (12) suite à l'irradiation,
- un système d'évaluation (20) commandé par programme, comportant une unité de mémoire pour la mémorisation de données qui indiquent la courbe de la conductibilité thermique (a) de l'échantillon (12) dépendant de la température, et conçue pour réaliser les étapes suivantes consistant à :
- déterminer une conductibilité thermique (a) de l'échantillon (12) par évaluation de l'intensité détectée du rayonnement thermique,
- déterminer la température (T) de l'échantillon (12), d'une part à l'aide de la conductibilité thermique (a) déterminée, en utilisant les données citées et d'autre part au moyen du système de mesure de la température (22),
- calibrer le système de mesure de la température (22) par une comparaison de résultats des deux mesures de la température (T) de l'échantillon (12).

7. Produit de programme informatique, comprenant un code programme, qui lorsqu'il est exécuté sur un système de traitement des données (20) d'un dispositif (20, 14, 16, 18, 22, 30, 32) selon l'une quelconque des revendications 4, 5 ou 6 commande la réalisation du procédé selon l'une quelconque des revendications 1 à 3.

**Fig. 1**

**Fig. 2**

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4131040 A1

- US 20140140364 A

**In der Beschreibung aufgeführte Nicht-Patentliteratur**

- **M. MANUELIAN et al.** *Thermal Diffusivity, Specific Heat, and Thermal Conductivity Measurment Using NETZSCH LFA 447 Nanoflash,* 16. Mai 2008, http://www.chem.mtu.edu/org/ctc/pdf/Nanoflash

- **JUERGEN BLUMM.** Das Laserflash Verfahren - aktuelle Entwicklungen und Tendenzen. *Tendenzen in der Materialentwicklung und die Bedeutung von Wärmetransporteigenschaften,* 23. Marz 2007, http://www.ak-thermophysik.de/download/gefta/2007/juergen_blumm.pdf